# EUROPÄISCHE PATENTANMELDUNG

(11) **EP 1 113 555 A1**
(43) Veröffentlichungstag der Anmeldung: **04.07.2001**
(21) Anmeldenummer: 00128481.9
(22) Anmeldetag: 23.12.2000
(51) Int. Cl.: H02G 3/08

(54) **Kabeldurchführung**

(30) Priorität: 31.12.1999 DE 19963905
(71) Anmelder: Lapp Holding Aktiengesellschaft, 70565 Stuttgart (DE)
(72) Erfinder: Lapp, Siegbert, 70599 Stuttgart (DE); Schaeffer, Jürgen, Dr., 70771 Leinfelden-Echterdingen (DE)
(74) Vertreter: Hoeger, Stellrecht & Partner

(57) **Zusammenfassung**

Um eine Kabeldurchführung umfassend
einen in eine Gehäuseöffnung einsetzbaren und an diesen fixierbaren Montagekörper,
und eine am Montagekörper gehaltene Aufnahme für ein durchzuführendes Kabel, welche ein elastisch deformierbares, das durchgeführte Kabel haltendes Fixierelement umfaßt, derart zu verbessern, daß diese möglichst einfach herstellbar ist, wird vorgeschlagen, daß der Montagekörper und die Aufnahme mit dem Fixierelement einstückig aus elastischem Kunststoff hergestellt sind
und daß die Aufnahme eine von dem Montagekörper getrennte Aufnahmehülse umfaßt, welche einen Aufnahmekanal bildet, in welchen sich von der Aufnahmehülse abstehende Vorsprünge erstrecken.

## Beschreibung

Die Erfindung betrifft eine Kabeldurchführung umfassend einen in eine Gehäuseöffnung einsetzbaren und an diesem fixierbaren Montagekörper und eine am Montagekörper gehaltene Aufnahme für ein durchzuführendes Kabel, welche ein elastisch deformierbares, das durchgeführte Kabel haltendes Fixierelement umfaßt.

Derartige Kabeldurchführungen sind beispielsweise aus dem Stand der Technik bekannt und umfassen als Montagekörper eine Gewindehülse, welche einerseits in die Gehäuseöffnung einschraubbar ist und andererseits ebenfalls ein Gewinde trägt, auf welches eine Hutmutter aufschraubbar ist.

Ferner umfaßt die Gewindehülse einen endseitig angeformten Lamellenkorb, in welchen eine separate Ringdichtung einlegbar ist. Durch Aufschrauben der Hutmutter läßt sich der Lamellenkorb in radialer Richtung deformieren, um die Ringdichtung zusammenzupressen, welche einerseits einen dichten Abschluß um das durchgeführte Kabel herum bildet und andererseits das Kabel durch radiale Pressung fixiert.

Derartige Kabeldurchführungen sind aufwendig herzustellen.

Der Erfindung liegt daher die Aufgabe zugrunde, eine Kabeldurchführung der gattungsgemäßen Art derart zu verbessern, daß diese möglichst einfach herstellbar ist.

Diese Aufgabe wird bei einer Kabeldurchführung der eingangs beschriebenen Art erfindungsgemäß dadurch gelöst, daß der Montagekörper und die Aufnahme mit dem Fixierelement einstückig aus elastischem Kunststoff hergestellt sind und daß die Aufnahme eine vom Montagekörper getrennte Aufnahmehülse umfaßt, welche einen Aufnahmekanal bildet, in welchen sich von der Aufnahmehülse abstehende elastisch deformierbare Vorsprünge erstrecken.

Der Vorteil der erfindungsgemäßen Lösung ist darin zu sehen, daß durch die einstückige Ausführung von Montagekörper und Aufnahme mit Fixierelement eine einfache Möglichkeit der Herstellung gegeben ist und andererseits das Vorsehen einer Aufnahmehülse mit Vorsprüngen eine ausreichend große Verformbarkeit zuläßt, die bereits aufgrund der Verformung beim Einführen des Kabels ein festes Fixieren des durchgeführten Kabels ermöglicht, ohne daß ein Anziehen beispielsweise einer Hutmutter erforderlich ist.

Vorzugsweise sind dabei die Vorsprünge in axialer Richtung der Aufnahmehülse deformierbar und wirken aufgrund ihrer Deformation in Einschubrichtung des Kabels einem Herausziehen des Kabels aus der Aufnahmehülse entgegengesetzt zur Einschubrichtung ähnlich wie Widerhaken entgegen.

Die Vorsprünge können im einfachsten Fall so ausgebildet sein, daß sie in Richtung des Aufnahmekanals vorspringende Noppen oder Borsten bilden. Besonders günstig ist es, wenn die Vorsprünge in azimutaler Richtung um die Achse des Aufnahmekanals herum verlaufende Reihen von am Kabel anlegbaren Angriffsflächen bilden, so daß ein in den Aufnahmekanal eingeführtes Kabel allseitig durch am Kabel anlegbare Angriffsflächen fixierbar ist.

Besonders günstig ist es, wenn jede der Reihen die Achse des Aufnahmekanals in azimutaler Richtung einmal umschließt.

Eine besonders gute Fixierung ist dann möglich, wenn mindestens zwei derartige Reihen in Richtung der Achse des Aufnahmekanals versetzt zueinander angeordnet sind, so daß eine mehrfache allseitige Fixierung des Kabels in dem Aufnahmekanal erfolgt.

Hinsichtlich der Ausbildung der Vorsprünge sind die unterschiedlichsten Möglichkeiten denkbar. Eine besonders vorteilhafte Art der Vorsprünge sieht vor, daß die Vorsprünge als sich mit ihren Flachseiten quer zur Achse des Aufnahmekanals erstreckende Lamellen ausgebildet sind.

Dabei können die Lamellen beispielsweise in Reihen angeordnet sein.

Eine besonders günstige Form der Anordnung der Lamellen sieht vor, daß die Lamellen längs in sich geschlossener, um die Achse des Aufnahmekanals umlaufender Ringe angeordnet sind.

Alternativ dazu ist es günstig, wenn die Lamellen längs einer sich um die Achse des Aufnahmekanals windender Helix angeordnet sind.

Bei den bislang bekannten Lösungen sollen die Lamellen nach wie vor einzelne Lamellen sein.

Besonders günstig ist es, wenn die Lamellen einen in azimutaler Richtung um die Achse des Aufnahmekanals geschlossen umlaufenden Lamellenzug bilden.

Hinsichtlich der Ausbildung des Montagekörpers wurde im Zusammenhang mit der bisherigen Erläuterung der einzlenen Ausführungsbeispiele keine näheren Angaben gemacht. So sieht eine besonders vorteilhafte Lösung vor, daß der Montagekörper eine Montagekörperhülse umfaßt.

Zur Fixierung der Montagekörperhülse in der Gehäuseöffnung ist es daher denkbar, daß an die Montagekörperhülse ein Rastelement angeformt ist, welches vorzugsweise durch Eindrücken der Montagekörperhülse die Gehäusewand an einer Innenseite hintergreift.

Das Rastelement kann dabei entweder aus einzelnen Rastelementen gebildet sein oder einen umlaufenden Ring bilden.

Ferner ist vorzugsweise vorgesehen, daß an der Montagekörperhülse ein Stützring angeformt ist, mit welchem sich der Montagekörper auf einer Außenseite einer Gehäusewand abstützt.

Vorzugsweise ist dabei der Stützring so ausgebildet, daß er einen elastisch deformierbaren Stützringbereich aufweist, so daß eine spielfreie Montage der Kabeldurchführung möglich ist.

Ferner wurden hinsichtlich der Ausbildung des Montagekörpers noch keine näheren Angaben gemacht. Besonders günstig ist es, wenn der Montagekörper einen an die Montagehülse angeformten Stirnbereich aufweist, an welchem die Aufnahmehülse gehalten ist.

Vorzugsweise ist dabei die Aufnahmehülse so angeordnet, daß sie sich von dem Stirnbereich ausgehend innerhalb der Montagehülse und von dieser durch einen Freiraum getrennt erstreckt.

Die Aufnahmehülse könnte prinzipiell zylindrisch ausgebildet sein. Eine besonders günstige Lösung sieht jedoch vor, daß sich die Aufnahmehülse ausgehend von dem Stirnbereich des Montagekörpers konisch verjüngt, so daß eine zusätzliche Möglichkeit besteht, einerseits eine hohe Elastizität im Bereich der Aufnahmehülse vorzusehen, andererseits aber auch eine ausreichend feste Fixierung des durchgeführten Kabels zu erhalten.

Bei der erfindungsgemäßen Lösung ist es prinzipiell dann, wenn die Lamellen ringförmig geschlossene Lamellenzüge bilden, nicht notwendig, zusätzlich noch eine Dichtung vorzusehen, da diese ringförmig geschlossenen Lamellenzüge dann, wenn sie an der Außenseite des Kabels anliegen, dicht mit dem Kabel abschließen und somit für die erforderliche Staub- und Feuchtigkeitsdichtigkeit sorgen.

Verlaufen jedoch die Lamellen längs einer Helix oder bilden die in Reihen angeordneten Lamellen nicht durchgehende Lamellenzüge, so ist zur Optimierung der Dichtwirkung vorzugsweise noch eine Abdichtung vorzusehen.

Selbst im Fall ringförmig umlaufender Lamellenzüge ist es jedoch ebenfalls vorteilhaft, wenn zur Abdichtung eine Dichtmembran vorgesehen ist.

Vorzugsweise ist dabei die Dichtmembran so ausgebildet, daß sie den Aufnahmekanal im Ausgangszustand verschließt, jedoch konzentrisch zur Längsachse der Aufnahmehülse verlaufende Sollbruchstellen, insbesondere Sollbruchringe, aufweist, so daß die Dichtmembran mittels eines einfachen Hilfsmittels oder eines einzuführenden Kabels durchstoßbar ist und dadurch sich in der Dichtmembran eine an die Dicke des Kabels angepaßte Öffnung bildet, die jedoch dicht an der Außenseite des Kabels anliegt.

Prinzipiell wäre es denkbar, die Dichtmembran an jeder Stelle des Aufnahmekanals anzuordnen. Eine besonders günstige Lösung sieht vor, daß die Dichtmembran an einem dem Stirnbereich des Montagekörpers abgewandten Ende der Aufnahmehülse angeordnet ist, um das Kabel vor Eintritt in das Gehäuse optimal abzudichten.

Alternativ zum Vorsehen einer geschlossenen Dichtmembran mit Sollbruchstellen oder ergänzend dazu ist vorzugsweise vorgesehen, daß im Stirnbereich des Montagekörpers eine äußere Dichtmembran angeordnet ist.

Eine derartige äußere Dichtmembran ist vorzugsweise geschlossen und mit Sollbruchstellen, beispielsweise Sollbruchringen, versehen.

Alternativ dazu ist diese so ausgebildet, daß sie eine Einführöffnung für ein durchzuführendes Kabel aufweist, so daß diese äußere Dichtmembran nicht mit dem durchzuführenden Kabel durchstoßen werden muß.

Dabei ist es jedoch erforderlich, die Einführöffnung für das durchzuführende Kabel in der Dichtmembran so zu dimensionieren, daß alle vorgesehenen Kabel dicht mit der Einführöffnung abschließen.

Da erfindungsgemäß bereits der Montagekörper die Aufnahmehülse und die Vorsprünge als einstückige Teile ausgebildet sind, wäre es prinzipiell denkbar, die Dichtmembranen jeweils als separate Teile auszubilden.

Besonders günstig ist es jedoch, wenn die jeweilige Dichtmembran ebenfalls einstückig an dem Montagekörper und/oder der Aufnahmehülse angeformt ist.

Hinsichtlich der Art des elastischen Kunststoffs wurde im Zusammenhang mit den bisherigen Ausführungsbeispielen keine näheren Angaben gemacht. So sieht ein vorteilhaftes Ausführungsbeispiel vor, daß der elastische Kunststoff ein thermoplastisches Elastomer ist.

Vorzugsweise weist dabei der elastische Kunststoff eine Härte Shore D im Bereich von ungefähr 30 bis ungefähr 60 auf, vorzugsweise im Bereich von ungefähr 35 bis ungefähr 53.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Draufsicht auf eine erfindungsgemäße Kabeldurchführung gemäß einem ersten Ausführungsbeispiel;
- Fig. 2: einen Schnitt längs Linie A-A in Fig. 1;
- Fig. 3: eine perspektivische Ansicht von vorne auf das erste Ausführungsbeispiel;
- Fig. 4: eine perspektivische Ansicht von hinten auf das erste Ausführungsbeispiel;
- Fig. 5: einen Schnitt ähnlich Fig. 2 durch ein zweites Ausführungsbeispiel einer erfindungsgemäßen Kabeldurchführung und
- Fig. 6: einen Schnitt ähnlich Fig. 2 durch ein drittes Ausführungsbeispiel einer erfindungsgemäßen Kabeldurchführung.

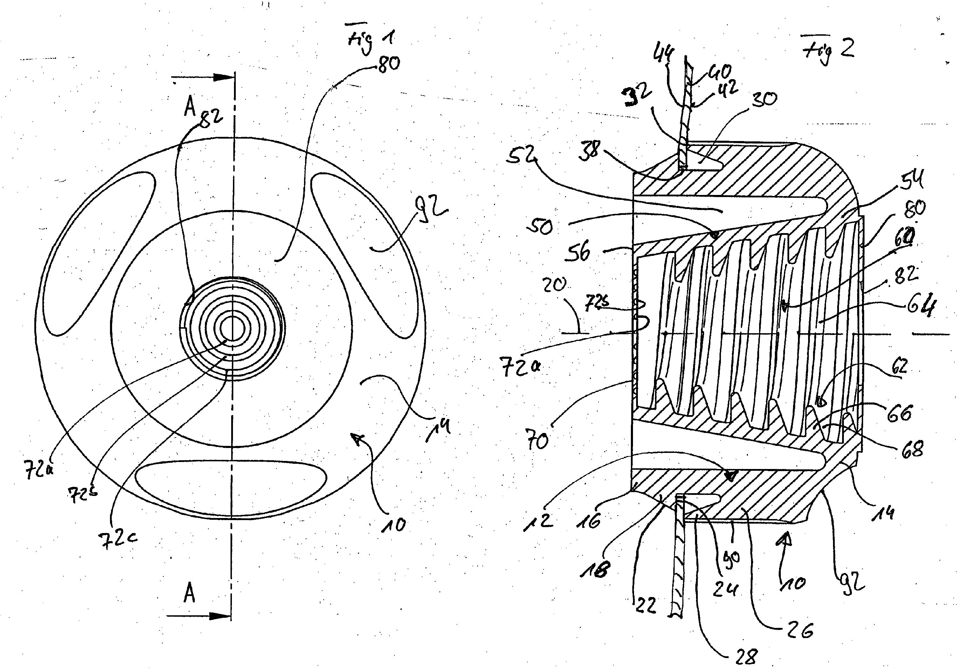

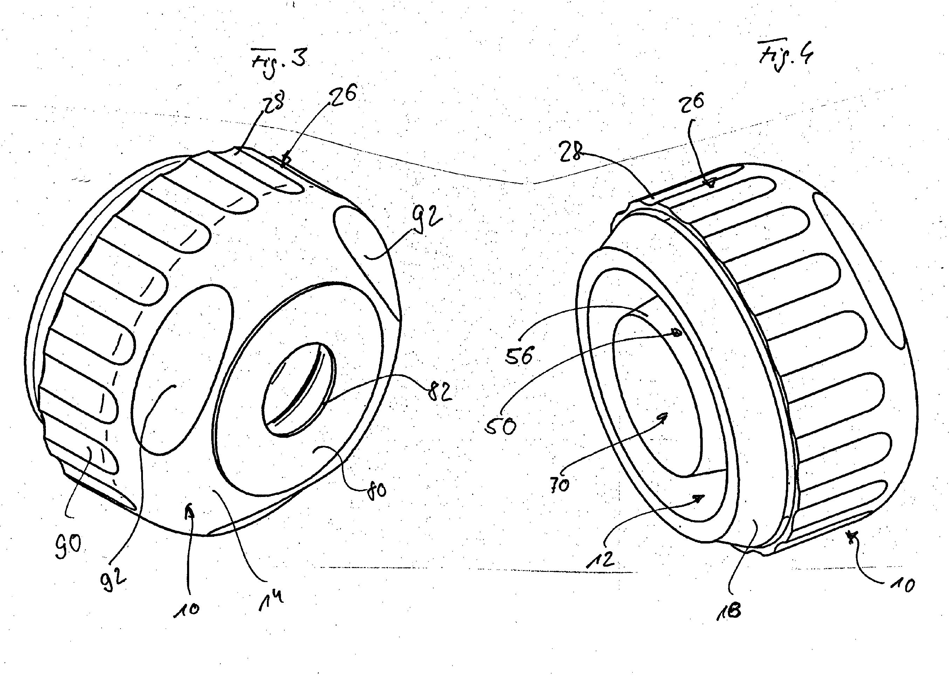

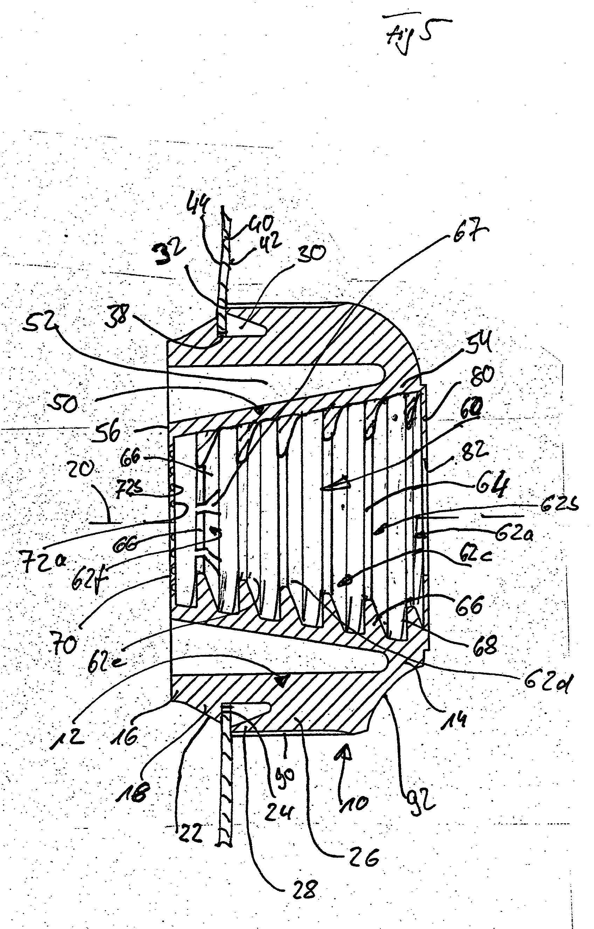

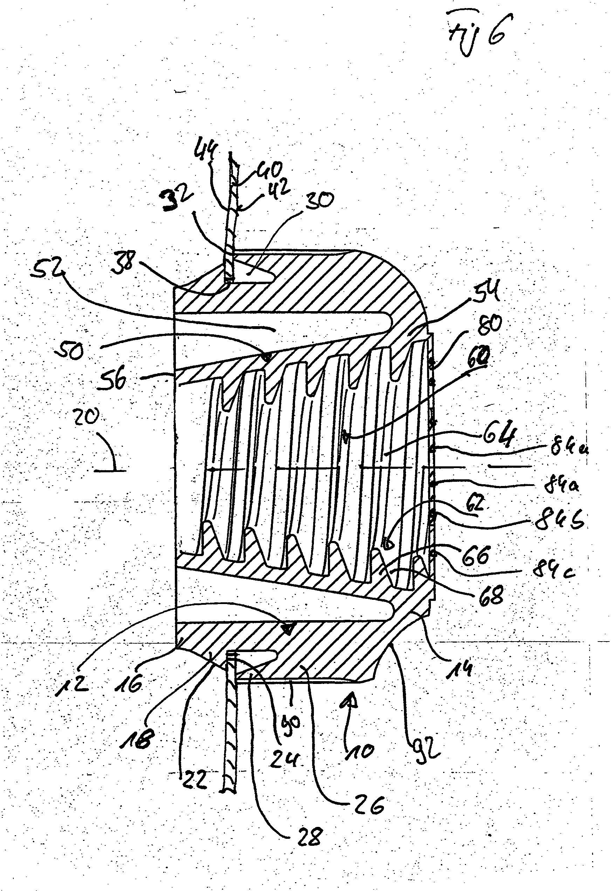

Ein erstes Ausführungsbeispiel einer erfindungsgemäßen Kabeldurchführung, dargestellt in den Figuren 1 bis 4 umfaßt einen als Ganzes mit 10 bezeichneten Montagekörper, welcher eine Montagekörperhülse 12 und einen sich an die Montagekörperhülse endseitig anschließenden Stirnbereich 14 aufweist.

Die Montagekörperhülse 12 trägt nahe ihres dem Stirnbereich 14 abgewandten Endes 16 einen Rastring 18, welcher ausgehend von dem Ende 16 der Montagekörperhülse eine sich bezüglich einer Achse 20 der Montagekörperhülse 12 konisch erweiternde Eindrückfläche 22 aufweist, welche in eine radial zur Achse 20 verlaufende Rastfläche 24 des Rastrings 18 übergeht.

Darüber hinaus ist die Montagekörperhülse 12 noch mit einem zwischen dem Rastring 18 und dem Stirnbereich 14 angeordneten Stützring 26 versehen, der seinerseits auf seiner dem Rastring 18 zugewandten Seite einen Stützringbereich 28 aufweist, der ringförmig um die Montagekörperhülse 12 und von dieser durch einen Zwischenraum 30 getrennt herum verläuft und somit unabhängig von der Montagekörperhülse 12 deformierbar ist.

Vorzugsweise verläuft der Stützringbereich 28 sich konisch verjüngend in Richtung des Rastrings 18 bis zu einer Stützfläche 32 und ist somit in seinem nahe der Stützfläche 32 liegenden Abschnitt sowohl in Richtung der Achse 20 als auch radial zu dieser deformierbar.

Der Montagekörper 10 ist dadurch vorteilhaft in eine Öffnung 38 in einer Wand 40 eines Gehäuses einsetzbar, daß die Montagekörperhülse 12 mit ihrem Ende 16 an einer Außenseite 42 der Wand 40 angesetzt wird und mitsamt dem Rastring 68 durch die Öffnung 38 dadurch hindurchgedrückt wird, daß die sich konisch erweiternde Einrückfläche 22 zu einer radialen Deformation der Montagekörperhülse 12 im Bereich des Rastrings 18 führt, so daß dieser durch die Öffnung 38 hindurchbewegbar ist und nach vollständigem Hindurchbewegen durch die Öffnung 38 mit seiner Rastfläche 24 in der Lage ist, die Wand 40 auf ihrer Innenseite 44 zu hintergreifen. Dabei kommt gleichzeitig der Stützring 26 mit seinem elastischen Stützringbereich 28, insbesondere mit der Stützfläche 32 desselben an der Außenseite 42 zur Anlage, wobei je nach Dicke der Wand 40 eine mehr oder weniger starke Deformation des elastischen Stützringbereichs 28 sowohl in Richtung der Achse 20 als auch radial zu dieser erfolgt, so daß insgesamt der Montagekörper 12 spielfrei an der Öffnung 38 der Wand 40 montierbar ist.

Ausgehend von dem Stirnbereich 14 des Montagekörpers 10 erstreckt sich vorzugsweise koaxial zur Montagekörperhülse 12 eine Aufnahmehülse 50 innerhalb der Montagekörperhülse 12 und ist von dieser durch einen azimutal um die Aufnahmehülse 50 herum verlaufenden Freiraum 52 getrennt, welcher sich von dem Ende 16 der Montagekörperhülse 12 bis nahe zum Stirnbereich 14 erstreckt.

Die Aufnahmehülse 50 ist somit lediglich mit ihrem sich an den Stirnbereich 14 anschließenden Ende 54 mit dem Montagekörper 10 verbunden und erstreckt sich vorzugsweise ausgehend von dem Ende 54 konisch verjüngend bis zu ihrem dem Stirnbereich 14 gegenüberliegenden Ende 56.

Die Aufnahmehülse 50 umschließt dabei einen Aufnahmekanal 60 für ein durchzuführendes Kabel, welches vorzugsweise ausgehend von dem Ende 54 in den Aufnahmekanal 60 einführbar ist.

Zur Fixierung des Kabels ist die Aufnahmehülse 50 mit einem in radialer Richtung zur Achse 20 hin vorspringenden Lamellenzug 62 versehen, welcher ausgehend vom Ende 54 durchgehend helixförmig bis nahe dem Ende 56 verläuft und somit ebenfalls eine helixförmig verlaufende stirnseitige Angriffsfläche 64 bildet, welcher an einer Außenseite des in dem Aufnahmekanal 60 eingeführten Kabels anlegbar ist, wobei beim Einführen des Kabels eine Deformation des Lamellenzuges 62 zumindest in seinem nahe dem Ende 56 der Aufnahmehülse 50 liegenden Bereich erfolgt, wodurch eine Fixierung des durchgeführten Kabels eintritt.

Vorzugsweise sind dabei die den durchgehenden Lamellenzug 62 bildenden Lamellen 66 im Querschnitt so ausgebildet, daß sie dem Ende 54 zugewandte Einführschrägen 68 bilden, die ausgehend von der Aufnahmehülse 50 in Richtung bis zur Angriffsfläche 64 schräg zum Ende 56 hin geneigt verlaufen, um das Einführen des Kabels in den Kabelkanal 60 vom Ende 54 her zu erleichtern.

Aufgrund dieser Querschnittsform haben die einzelnen Lamellen 66 auch die Tendenz bei radial wirkenden Kräften eine Deformation in radialer Richtung unter gleichzeitiger Bewegung in axialer Richtung zum Ende 56 hin auszuführen und somit ein vom Ende 54 her eingeführtes Kabel ähnlich wie Widerhaken gegen in Richtung der Achse 20 und entgegensetzt zur Einführrichtung wirkende Zugkräfte zu fixieren.

Zur Abdichtung des Kabels ist die Aufnahmehülse 50 im Bereich ihres Endes 56 mit einer inneren Dichtmembran 70 versehen, welche bei noch nicht eingeführtem Kabel die Aufnahmehülse 50 vollständig verschließt und konzentrisch zur Achse 20 ringförmig verlaufende Dünnstellen 72 aufweist, welche Sollbruchstellen der Dichtmembran darstellen und je nach Stärke des Kabels beim Einführen des Kabels durch die Aufnahmehülse 50 einen Durchbruch entstehen lassen.

Ferner ist zur Abdichtung des Kabels noch eine äußere Dichtmembran 80 vorgesehen, welche am Ende 54 der Aufnahmehülse 52 angeordnet ist und einen bereits vorgesehenen mittleren Durchbruch 82 aufweist, welcher jedoch so dimensioniert ist, daß die äußere Dichtmembran 80 bei allen für die Kabeldurchführung spezifizierten Kabeln mit dem Durchbruch 82 am Kabel im wesentlichen dicht anliegt.

Zur Handhabung der erfindungsgemäßen Kabeldurchführung ist vorzugsweise vorgesehen, daß der Montagekörper 10 insbesondere im Bereich des Stützrings 26 Vertiefungen 90 aufweist, die ein sicheres Greifen des Montagekörpers 10 erlauben und außerdem noch vorzugsweise im Stirnbereich 14 vorgesehene Vertiefungen 92, die ebenfalls die Handhabbarkeit des Montagekörpers 10 verbessern und insbesondere ein Eindrücken desselben in die Öffnung 38 der Wand 40 des Gehäuses erleichtern.

Erfindungsgemäß ist die gesamte Kabeldurchführung mit allen Elementen als einstückiges Spritzgußteil aus einem elastischen Kunststoffmaterial hergestellt.

Vorzugsweise findet dabei als Kunststoffmaterial ein thermoplastisches Elastomer Verwendung, welches bevorzugterweise eine Härte Schore D von ungefähr 30 bis ungefähr 60, vorzugsweise ungefähr 35 bis ungefähr 53 aufweist.

Bei einem zweiten Ausführungsbeispiel einer erfindungsgemäßen Kabeldurchführung bilden die einzelnen Lamellen 66 jeweils azimutal um die Achse 20 herum geschlossene Lamellenringe 62a bis 62e, welche in Richtung der Achse 20 im Abstand voneinander angeordnet sind.

Ferner ist beispielsweise zusätzlich der Lamellenring 62f nicht als durchlaufend geschlossener Lamellenring ausgebildet sondern aus einzelnen, aufeinanderfolgenden Lamellen 66 gebildet, welche durch Zwischenräume 67 voneinander getrennt sind, um insgesamt die Elastizität des Lamellenrings 62f zu erhöhen.

Eine derartige Aufteilung der Lamellenringe ist ebenfalls bei den Lamellen 62a bis 62e denkbar.

Im übrigen ist das zweite Ausführungsbeispiel in gleicher Weise ausgebildet wie das erste Ausführungsbeispiel, so daß auf dieses vollinhaltlich Bezug genommen werden kann.

Bei einem dritten Ausführungsbeispiel, dargestellt in Fig. 8, ist keine innere Dichtmembran vorgesehen, sondern lediglich die äußere Dichtmembran 80, welche im Ausgangszustand geschlossen ist und Sollbruchstellen in Form zur Mittelachse 42 konzentrischer Ringe 84a bis 84c, welche Dünnstellen der äußeren Dichtmembran 80 darstellen.

Im übrigen ist das dritte Ausführungsbeispiel in gleicher Weise ausgebildet wie das erste Ausführungsbeispiel, so daß auf die Ausführungen hierzu vollinhaltlich Bezug genommen wird.

## Patentansprüche

1. Kabeldurchführung umfassend
einen in eine Gehäuseöffnung einsetzbaren und an diesen fixierbaren Montagekörper (10),
und eine am Montagekörper (10) gehaltene Aufnahme (50) für ein durchzuführendes Kabel, welche ein elastisch deformierbares, das durchgeführte Kabel haltendes Fixierelement (62) umfaßt,
**dadurch gekennzeichnet,** daß der Montagekörper (10) und die Aufnahme (50) mit dem Fixierelement (62) einstückig aus elastischem Kunststoff hergestellt sind
und daß die Aufnahme eine von dem Montagekörper (10) getrennte Aufnahmehülse (50) umfaßt, welche einen Aufnahmekanal (60) bildet, in welchen sich von der Aufnahmehülse (50) abstehende Vorsprünge (66) erstrecken.

2. Kabeldurchführung nach Anspruch 1, dadurch gekennzeichnet, daß die Vorsprünge (66) in axialer Richtung des Aufnahmekanals (60) deformierbar sind.

3. Kabeldurchführung nach Anspruch 1 oder 2, dadurch gekennzeichnet, daß die Vorsprünge (66) in azimutaler Richtung um die Achse (20) des Aufnahmekanals (60) Reihen von am Kabel anlegbaren Angriffsflächen (64) bilden.

4. Kabeldurchführung nach Anspruch 3, dadurch gekennzeichnet, daß jede der Reihen (62) die Achse (20) des Aufnahmekanals in azimutaler Richtung einmal umschließt.

5. Kabeldurchführung nach Anspruch 3 oder 4, dadurch gekennzeichnet, daß mindestens zwei derartige Reihen in Richtung der Achse (20) des Aufnahmekanals (60) versetzt zueinander angeordnet sind.

6. Kabeldurchführung nach einem der voranstehenden Ansprüche, dadurch gekennzeichnet, daß die Vorsprünge als sich mit ihren Flachseiten (68) quer zur Achse (20) des Aufnahmekanals (60) erstreckende Lamellen (66) ausgebildet sind.

7. Kabeldurchführung nach Anspruch 6, dadurch gekennzeichnet, daß die Lamellen (66) längs in sich geschlossener um die Achse (20) des Aufnahmekanals (60) umlaufender Ringe angeordnet sind.

8. Kabeldurchführung nach Anspruch 6, dadurch gekennzeichnet, daß die Lamellen längs einer sich um die Achse (20) des Aufnahmekanals (60) windenden Helix angeordnet sind.

9. Kabeldurchführung nach einem der Ansprüche 6 bis 8,
dadurch gekennzeichnet, daß die Lamellen (66) einen in azimutaler Richtung um die Achse (20) des Aufnahmekanals (60) geschlossen umlaufenden Lamellenzug (62) bilden.

10. Kabeldurchführung nach einem der voranstehenden Ansprüche, dadurch gekennzeichnet, daß der Montagekörper (10) eine Montagekörperhülse (12) umfaßt.

11. Kabeldurchführung nach Anspruch 10, dadurch gekennzeichnet, daß die Montagehülse (12) die Gehäusewand (40) an einer Innenseite (44) hintergreifendes elastisch deformierbares Rastelement (18) aufweist.

12. Kabeldurchführung nach Anspruch 10 oder 11, dadurch gekennzeichnet, daß an der Montagekörperhülse (12) ein Stützring (26) angeformt ist, mit welchem sich der Montagekörper (10) auf einer Außenseite (42) der Gehäusewand (40) abstützt.

13. Kabeldurchführung nach Anspruch 12, dadurch gekennzeichnet, daß der Stützring (26) einen elastisch deformierbaren Stützringbereich (28) aufweist.

14. Kabeldurchführung nach einem der voranstehenden Ansprüche, dadurch gekennzeichnet, daß der Montagekörper (10) einen an die Montagehülse (12) angeformten Stirnbereich (14) aufweist, an welchem die Aufnahmehülse (50) gehalten ist.

15. Kabeldurchführung nach einem der voranstehenden Ansprüche, dadurch gekennzeichnet, daß sich die Aufnahmehülse (50) innerhalb der Montagekörperhülse (12) und von dieser durch einen Freiraum (52) getrennt erstreckt.

16. Kabeldurchführung nach Anspruch 15, dadurch gekennzeichnet, daß die Aufnahmehülse (50) sich ausgehend von dem Stirnbereich (14) des Montagekörpers (10) konisch verjüngt.

17. Kabeldurchführung nach einem der voranstehenden Ansprüche, dadurch gekennzeichnet, daß eine Dichtmembran (70) vorgesehen ist.

18. Kabeldurchführung nach Anspruch 17, dadurch gekennzeichnet, daß die Dichtmembran (70) konzentrisch zur Längsachse der Aufnahmehülse verlaufende Sollbruchstellen (72) aufweist.

19. Kabeldurchführung nach Anspruch 17 oder 18, dadurch gekennzeichnet, daß die Dichtmembran (70) im Bereich eines Endes (16) der Aufnahmehülse (50) angeordnet ist.

20. Kabeldurchführung nach einem der voranstehenden Ansprüche, dadurch gekennzeichnet, daß am Stirnbereich (14) des Montagekörpers (10) eine äußere Dichtmembran (80) angeordnet ist.

21. Kabeldurchführung nach Anspruch 20, dadurch gekennzeichnet, daß die äußere Dichtmembran (80) mit Sollbruchstellen (84) versehen ist.

22. Kabeldurchführung nach Anspruch 20, dadurch gekennzeichnet, daß die äußere Dichtmembran (80) eine Einführungöffnung (82) für ein durchzuführendes Kabel aufweist.

23. Kabeldurchführung nach einem der voranstehenden Ansprüche, dadurch gekennzeichnet, daß die Dichtmembran (70, 80) einstückig an dem Montagekörper (10) und/oder die Aufnahmehülse (50) angeformt ist.

24. Kabeldurchführung nach einem der voranstehenden Ansprüche, dadurch gekennzeichnet, daß der elastische Kunststoff ein thermoplastisches Elastomer ist.

25. Kabeldurchführung nach einem der voranstehenden Ansprüche, dadurch gekennzeichnet, daß der elastische Kunststoff eine Härte Shore D im Bereich von ungefähr 30 bis ungefähr 60 aufweist.
